# EUROPÄISCHE PATENTSCHRIFT

(11) **EP 3 440 369 B1**
(45) Veröffentlichungstag und Bekanntmachung des Hinweises auf die Patenterteilung: **29.04.2020**
(21) Anmeldenummer: 17719167.3
(22) Anmeldetag: 31.03.2017
(51) Int. Cl.: F16D 3/74

(54) **ELASTISCHE WELLENKUPPLUNG**
ELASTIC SHAFT COUPLING
ACCOUPLEMENT ÉLASTIQUE D'ARBRES

(30) Priorität: 07.04.2016 DE 102016106365
(43) Veröffentlichungstag der Anmeldung: 13.02.2019
(73) Patentinhaber: Hackforth GmbH, 44653 Herne (DE)
(72) Erfinder: FLINTROP, Joachim, 47057 Duisburg (DE)
(74) Vertreter: Schneiders & Behrendt PartmbB Rechtsanwälte - Patentanwälte
(86) Internationale Anmeldenummer: PCT/EP2017/057673
(87) Internationale Veröffentlichungsnummer: WO 2017/174453

(56) Entgegenhaltungen:
- EP-A2- 0 939 238
- DE-A1- 3 938 261
- DE-U1-202008 012 129

## Beschreibung

Die Erfindung betrifft eine elastische Wellenkupplung mit einem Antriebsflansch und einem Abtriebsflansch, zwischen denen elastisch verformbare Elastomerkörper angeordnet sind, die jeweils die Gestalt von Ringsegmenten haben und in mindestens zwei sich axial aneinander anschließenden, die Achse der Wellenkupplung umgebenden Ringen angeordnet sind, wobei die die Ringe bildenden Elastomerkörper in Umfangsrichtung gegeneinander versetzt angeordnet sind und an ihren axial an den Antriebsflansch bzw. den Abtriebsflansch angrenzenden Stirnflächen unlösbar mit Anschlussflanschsegmenten verbunden sind, die axial mit dem Antriebsflansch bzw. dem Abtriebsflansch verschraubbar sind, sowie an den axial aneinander angrenzenden Stirnflächen unlösbar mit Verbindungsflanschsegmenten verbunden sind, die axial miteinander verschraubbar sind.

Derartige elastische Wellenkupplungen sind zum Beispiel aus den EP 0 939 238 A2 und EP 1 413 789 A1 bekannt und auch sonst im Stand der Technik weit verbreitet. Sie dienen zur Übertragung von Antriebskräften, wenn zwischen Antrieb und Abtrieb ein Wellenversatz zu überwinden ist oder wenn Drehschwingungen gedämpft werden müssen.

Eine derartige elastische Wellenkupplung arbeitet mit einer Vielzahl von elastisch verformbaren Elastomerkörpern, zum Beispiel aus Gummi, die jeweils die Gestalt von untereinander gleichgroßen Ringssegmenten haben, die zwischen dem Antriebsflansch und dem Abtriebsflansch in zwei oder mehr axial aneinander angrenzenden Ringen angeordnet sind, welche die Achse der Wellenkupplung umgeben. Jeder Ring besteht aus mehreren Ringssegmenten, beispielsweise 2 bis 6 Ringssegmenten, die von einem Ring zum axial benachbarten Ring in Umfangsrichtung jeweils um das halbe Bogenmaß der Ringssegmente versetzt angeordnet sind und axial durch Schraubverbindungen miteinander und mit dem Antriebsflansch sowie dem Abtriebsflansch verbunden sind. Durch den gegenseitigen Versatz der einzelnen Ringssegmente soll ein in Umfangsrichtung möglichst stabiler Verbund der Elastomerkörper hergestellt werden.

Jedes Ringssegment weist einen elastisch verformbaren Elastomerkörper auf, zum Beispiel aus Gummi, der axial an beiden Seiten mit geeigneten Anschlusselementen aus Stahl versehen ist. Diese Anschlusselemente sind unlösbar, zum Beispiel durch Vukanisieren, mit dem Elastomerkörper verbunden und sind an den am Antriebsflansch bzw. am Abtriebsflansch angrenzenden Stirnflächen des Ringssegmentes als Anschlussflanschsegmente und an den axial aneinander angrenzenden Stirnflächen der Ringssegmente als Verbindungsflanschsegmente ausgebildet. Die Anschlussflanschsegmente überragen die Elastomerkörper in radialer Richtung und sind durch gleichmäßig auf den Umfang verteilt angeordnete Anschlussschrauben mit dem Antriebsflansch bzw. dem Abtriebsflansch verschraubt. Ähnlich überragen die Verbindungsflanschsegmente die Elastomerkörper in radialer Richtung und sind durch gleichmäßig auf den Umfang verteilt angeordnete Verbindungsschrauben miteinander verbunden.

Die nach dem Stand der Technik bekannten elastischen Wellenkupplungen der vorstehend beschriebenen Art haben sich im Prinzip bewährt und sind vielfältig im Einsatz. Probleme ergeben sich jedoch, wenn solche Wellenkupplungen mit erhöhter Drehzahl zum Einsatz kommen. Aufgrund der bei höheren Drehzahlen angreifenden großen Fliehkräfte kommt es nämlich zu unerwünschten Verformungen, insbesondere im Bereich der Elastomerkörper und der an diese angrenzenden Verbindungflanschsegmente, die weder vom Antriebsflansch her noch vom Abtriebsflansch her eine zentrierende Unterstützung erfahren. Man hat nach dem Stand der Technik zwar schon versucht, diese Verbindungsflanschsegmente untereinander durch in Umfangsrichtung verlaufende Laschen zusätzlich aneinander festzulegen. Diese Art der Verbindung erfordert neben den veränderten Verbindungsmitteln, dass die zusätzlich umlaufenden Massen, die in das System eingebracht werden, bei der Bestimmung der Systemeigenschaften berücksichtigt werden müssen, wodurch die Bestimmung der Systemeigenschaften kompliziert wird.

Es ist deshalb Aufgabe der Erfindung, die elastische Wellenkupplung der eingangs genannten Art dahingehend weiterzubilden, dass sie besser für den Einsatz bei hohen Drehzahlen geeignet ist.

Zur Lösung dieser Aufgabe schlägt die Erfindung ausgehend von der elastischen Wellenkupplung der eingangs genannten Art vor, dass die Verbindungflanschsegmente der Elastomerkörper jeweils an ihren in Umfangsrichtung einander angrenzenden Enden mit stufenförmig ineinandergreifenden Vor-und Rücksprüngen versehen sind, die miteinander und mit dem in axialer Richtung angrenzenden Verbindungsflanschsegment des in axialer Richtung benachbarten Elastomerkörpers verschraubbar sind.

Nach der Lehre der Erfindung sind die Verbindungsflanschsegmente der Elastomerkörper eines Ringes in Umfangsrichtung erstmals unmittelbar miteinander verbunden, und zwar unter Vermeidung von zusätzlichen, die umlaufende Masse vergrößernden Verbindungselementen. Zusätzlich werden die jeweils in Umfangsrichtung aneinander angrenzenden Enden der Verbindungsflanschsegmente der Elastomerkörper eines Ringes durch die erfindungsgemäß vorgeschlagene Verbindung mit den in axialer Richtung angrenzenden Verbindungsflanschsegmenten der axial benachbarten Elastomerkörper verspannt, was zu einem sehr stabilen Gesamtverbund aller Teile der elastischen Wellenkupplung führt, und zwar sowohl in Umfangsrichtung als auch in axialer Richtung. Im Ergebnis ist die elastische Wellenkupplung gemäß der Erfindung weitestgehend unempfindlich gegen erhöhte Drehzahlen.

Die erfindungsgemäß vorgeschlagene Schraubverbindung im Bereich der stufenförmig ineinandergreifenden Vor-und Rücksprünge der Verbindungsflanschsegmente könnte unter Umständen bei sehr hohen Drehzahlen überlastet werden. Diese Schraubverbindung muss nämlich drei Teile, d.h. die beiden in Umfangsrichtung aneinander angrenzenden Verbindungsflanschsegmente einerseits und das axial angrenzende Verbindungsflanschsegment des axial benachbarten Elastomerkörpers andererseits gegen extrem große Kräfte zusammenhalten, so dass es zu bleibenden Verformungen im Bereich dieser Schraubverbindung kommen kann. Aus diesem Grund sieht eine zweckmäßige Weiterbildung der elastischen Wellenkupplung gemäß der Erfindung vor, dass die axiale Verschraubung der Verbindungsflanschsegmente im Bereich der stufenförmig ineinandergreifenden Vor-und Rücksprünge mit Durchgangsschrauben und im übrigen Umfangsbereich mit Passschrauben erfolgt.

Die Verwendung von Durchgangsschrauben im Bereich der stufenförmig ineinandergreifenden Vor- und Rücksprünge hat den Vorteil, dass diese Schrauben bei fachgerechtem Einsatz nicht an den Lochleibungen anliegen und dementsprechend nicht auf Scherung beansprucht werden. Die erfindungsgemäß verwendeten Durchgangsschrauben werden lediglich auf Zug beansprucht und bewirken eine Kraftübertragung zwischen den miteinander zu verbindenden Teilen lediglich durch Flächenpressen und Reibung zwischen den von der Durchgangsschraube gegeneinander verspannten Teilen, so dass bleibende Verformungen der Schrauben ausgeschlossen werden.
Weiterhin ist vorgesehen, dass die Verbindungsflanschsegmente radial vorstehenden Zähne aufweisen, die jeweils mit axial fluchtend verlaufenden Durchgangsbohrungen zur Aufnahme der axial verlaufenden Passschrauben versehen sind. Die Ausbildung solcher Zähne an den Verbindungsflanschsegment bewirkt eine weitere Reduzierung der umlaufenden Masse. Außerdem wird im Bereich der Zwischenräume zwischen den einzelnen Zähnen Platz geschaffen, der zur Anbringung der Schraubverbindungen zwischen den Anschlussflanschsegmenten und Antriebsflansch bzw. Abtriebsflansch benötigt wird.

Vorteilhaft ist es weiterhin, wenn die stufenförmig ineinandergreifenden Vor-und Rücksprünge an den Enden zwei Verbindungsflanschsegmente sich jeweils zu einem radial vorstehenden Zahn ergänzen, der mit einem Zahn gleicher Größe verschraubbar ist, der sich am in axialer Richtung anschließenden Verbindungsflanschsegment des axial benachbarten Elastomerkörpers befindet. Hierdurch werden im Bereich der miteinander verbundenen Verbindungsflanschsegmente radiale Vorsprünge vermieden. Die Verbindungsbereiche zwischen den in Umfangsrichtung aufeinanderfolgenden Verbindungsflanschsegmenten reihen sich vielmehr weitestgehend unterschiedslos in die Reihe der an den Verbindungsflanschsegmenten ausgebildeten, radial vorstehenden Zähne ein.

Schließlich ist vorgesehen, dass die stufenförmig ineinandergreifenden Vor-und Rücksprünge an den Enden der Verbindungsflanschsegmente in radialer Richtung einen Abstand vom Außenumfang der Elastomerkörper haben. Hierdurch wird vermieden, dass die bei sehr hoher Drehzahl radial nach außen drängende Gummimasse der Elastomerkörper auf diese stufenförmig ineinandergreifenden Vor-und Rücksprünge einwirkt.

Ein Ausführungsbeispiel der Erfindung wird im Folgenden anhand der Zeichnung näher erläutert. Es zeigen:
- Figur 1:: eine elastische Wellenkupplung gemäß der Erfindung in einem axial verlaufenden Schnitt;
- Figur 2:: perspektivisch die Anordnung und Ausgestaltung der Elastomerkörper (ohne Antriebsflansch und Abtriebsflansch);
- Figur 3:: perspektivisch ein Verbindungsflanschsegment;
- Figur 4:: ein Detail aus Figur 3, nämlich die erfindungsgemäß ausgestaltete Verbindung der Verbindungsflanschsegmente.

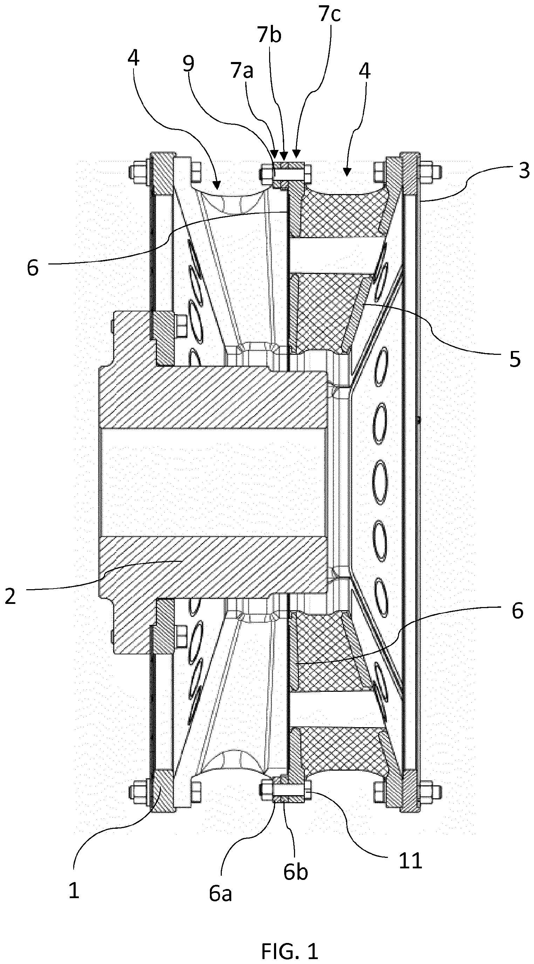

Die aus Figur 1 hervorgehende elastische Wellenkupplung weist einen Antriebsflansch 1 auf, der drehfest mit einer Antriebswelle 2 verbunden ist. Dem Antriebsflansch 1 gegenüberliegend ist ein Abtriebsflansch 3 vorgesehen, der mit einer nicht dargestellten Abtriebswelle verbunden werden kann.

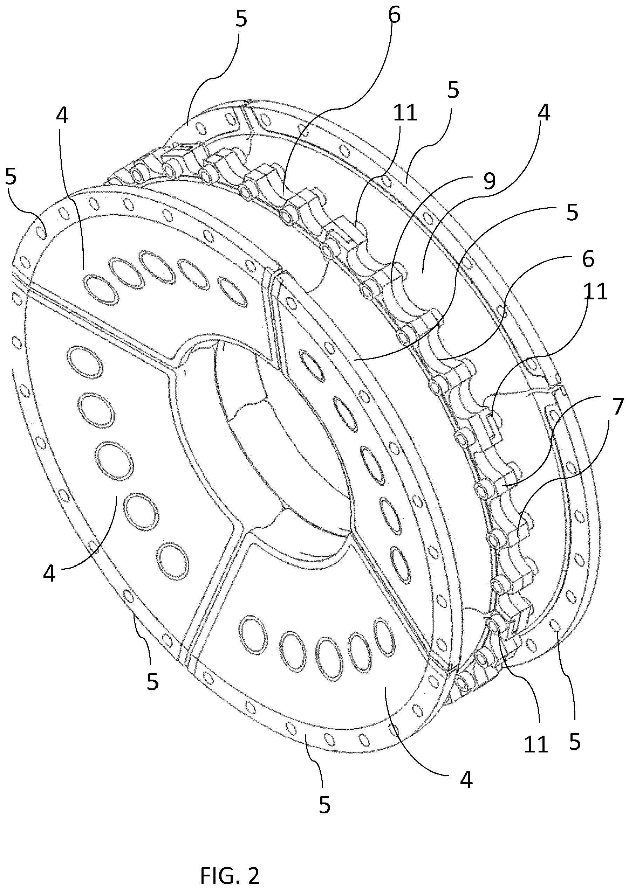

Zwischen dem Antriebsflansch 1 und dem Abtriebsflansch 3 ist eine Vielzahl von Elastomerkörpern 4 vorgesehen, die jeweils die Gestalt von Ringssegmenten haben. Dabei bilden jeweils vier Elastomerkörper einen die Achse der elastischen Wellenkupplung umgebenden Ring. Beim in der Zeichnung dargestellten Ausführungsbeispiel sind zwei solcher Ringe axial nebeneinander angeordnet, wobei die ringsegmentförmigen Elastomerkörper 4 der beiden Ringe um jeweils das halbe Bogenmaß der Ringssegmente gegeneinander versetzt angeordnet sind (vergl. Figur 2).

Die Elastomerkörper 4 bestehen jeweils aus Gummi und sind an ihren dem Antriebsflansch 1 bzw. dem Abtriebsflansch 2 zugewandten Stirnflächen mit anvulkanisierten Anschlussflanschsegmenten 5 aus Stahl versehen, die axial mit dem Antriebsflansch 1 bzw. dem Abtriebsflansch 3 verschraubbar sind. Weiterhin sind die Elastomerkörper 4 an ihren axial aneinander angrenzenden Stirnflächen mit Verbindungsflanschsegmenten 6 versehen, die ebenfalls aus Stahl bestehen und miteinander verschraubt werden können, wie nachfolgend im Einzelnen beschrieben wird.

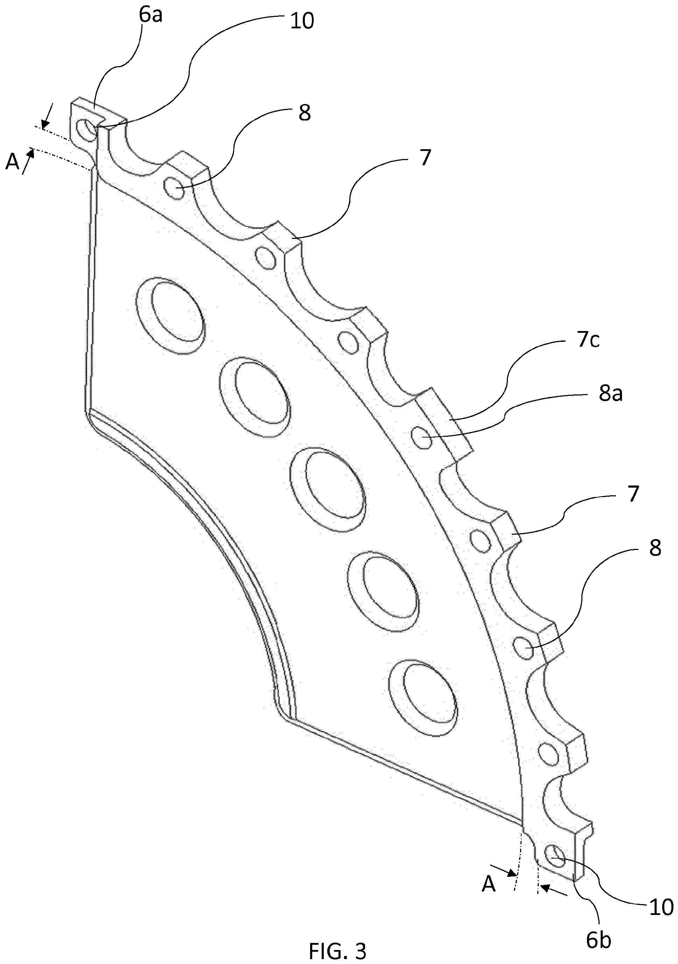

Wie weiterhin aus den Figuren 2, 3 und 4 hervorgeht, haben die Verbindungsflanschelemente 6 radial vorstehende Zähne 7, in welchen sich axiale Durchgangsbohrungen 8 befinden, in die bei montierter Kupplung Passschrauben 9 eingesetzt sind, die als Schraubverbindung zwischen den axial aneinander anliegenden Verbindungsflanschsegmenten 6 dienen.

Erfindungsgemäß sind die Verbindungsflanschsegmente 6 jeweils an ihren in Umfangsrichtung aneinander angrenzenden Enden mit stufenförmig ineinandergreifenden Vor- und Rücksprüngen 6a und 6b versehen, in welchen sich Durchgangsbohrungen 10 befinden, die bei montierter Kupplung ebenfalls miteinander fluchten. Die beiden stufenförmig ineinandergreifenden Vor-und Rücksprünge 6a und 6b an den Enden der Verbindungsflanschsegmente 6 ergänzen sich bei montierter Kupplung jeweils zu einem radial vorstehenden Zahn 7a/ 7 b, der mit einem Zahn 7c gleicher Größe verschraubt ist, der sich am in axialer Richtung benachbarten Verbindungsflanschsegment 7 des axial benachbarten Elastomerkörpers 4 befindet und mit einer fluchtenden axialen Durchgangsbohrung 8a versehen ist. Für die Schraubverbindung im Bereich der ineinandergreifenden Vor-und Rücksprünge 6a und 6b werden nach der Lehre der Erfindung Durchgangsschrauben 11 verwendet, die im Gegensatz zu den im Übrigen verwendeten Passschrauben 9 nicht an den Lochleibungen anliegen und bei fachgerechter Montage nicht auf Scherung, sondern lediglich auf Zug beansprucht werden.

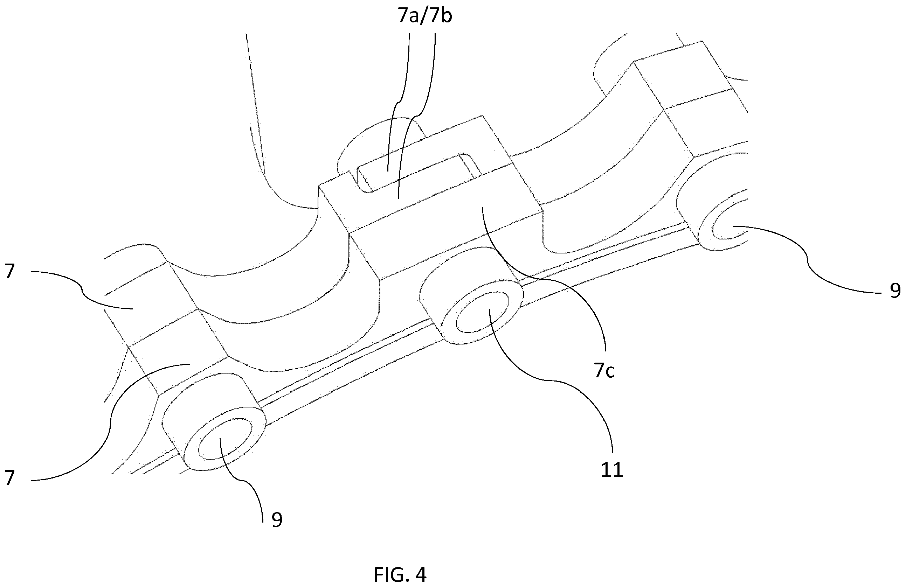

Wie insbesondere noch einmal in Figur 4 verdeutlicht ist, stellt die Erfindung einen in axialer und in Umfangsrichtung stabilen Verbund zwischen drei Verbindungsflanschsegmenten 6 her, nämlich zwischen zwei in Umfangsrichtung aneinander angrenzenden Verbindungsflanschsegmenten 6 und einem in axialer Richtung benachbarten Verbindungsflanschsegment 6.

Schließlich ist noch vorgesehen, dass die stufenförmig ineinandergreifenden Vor-und Rücksprünge 6a und 6b an den Enden der Verbindungsflanschsegmente 6 in radialer Richtung einen Abstand A vom Außenumfang 12 des Elastomerkörpers 4 haben. Damit liegt die zusätzliche geschaffen Verbindung innerhalb der kreisförmigen Auflagefläche der bisherigen Flanschverbindung, sodass auftretende Biegekräfte von den Vor- und Rücksprüngen 6a und 6b fern gehalten werden.

### Bezugszeichenliste:

- 1: Antriebsflansch
- 2: Antriebswelle
- 3: Abtriebsflansch
- 4: Elastomerkörper
- 5: Anschlussflanschsegment
- 6: Verbindungsflanschsegment
- 6a, 6b: Vor-und Rücksprünge an Verbindungsflanschsegment 6
- 7: Zähne
- 7a/7b: Zahn aus Vor-und Rücksprüngen 6a und 6b
- 7c: Zahn an benachbartem Verbindungsflanschsegment
- 8: Durchgangsbohrungen in Zähnen 7
- 8a: Durchgangsbohrung in Zahn 7c
- 9: Passschrauben
- 10: Durchgangsbohrungen in den Vor-und Rücksprüngen 6a und 6b
- 11: Durchgangsschrauben
- 12: Außenumfang des Elastomerkörpers 4
- A: Abstandsmaß

## Patentansprüche

1. Elastische Wellenkupplung mit einem Antriebsflansch (1) und einem Abtriebsflansch (3), zwischen denen elastisch verformbare Elastomerkörper (4) angeordnet sind, die jeweils die Gestalt von Ringsegmenten haben und in mindestens zwei sich axial aneinander anschließenden, die Achse der Wellenkupplung umgebenden Ringen angeordnet sind, wobei die die Ringe bildenden Elastomerkörper (4) in Umfangsrichtung gegeneinander versetzt angeordnet sind und an ihren axial an den Antriebsflansch (1) bzw. den Abtriebsflansch (3) angrenzenden Stirnflächen unlösbar mit Anschlussflanschsegmenten (5) verbunden sind, die axial mit dem Antriebsflansch (1) bzw. dem Abtriebsflansch (3) verschraubbar sind, sowie an den axial aneinander angrenzenden Stirnflächen unlösbar mit Verbindungsflanschsegmenten (6) verbunden sind, die axial miteinander verschraubbar sind,
**dadurch gekennzeichnet,**
**dass** die Verbindungsflanschsegmente (6) der Elastomerkörper (4) jeweils an ihren in Umfangsrichtung aneinander angrenzenden Enden mit stufenförmig ineinandergreifenden Vor-und Rücksprüngen (6a, 6b) versehen sind, die miteinander und mit dem in axialer Richtung angrenzenden Verbindungflanschsegment (6) des in axialer Richtung benachbarten Elastomerkörpers (4) verschraubbar sind.

2. Wellenkupplung nach Anspruch 1, **dadurch gekennzeichnet, dass** die axiale Verschraubung der Verbindungsflanschsegmente (6) im Bereich der stufenförmig ineinandergreifenden Vor-und Rücksprünge (6a, 6b) mit Durchgangsschrauben (11) und im übrigen Umfangsbereich mit Passschrauben (9) erfolgt.

3. Wellenkupplung nach den Ansprüchen 1 und 2, **dadurch gekennzeichnet, dass** die Verbindungsflanschsegmente (6) radial vorstehende Zähne (7) aufweisen, die jeweils mit axial fluchtend verlaufenden Durchgangsbohrungen (8) zur Aufnahme der axial verlaufenden Passschrauben (9) versehen sind.

4. Wellenkupplung nach den Ansprüchen 1 bis 3, **dadurch gekennzeichnet, dass** die stufenförmig ineinandergreifenden Vor-und Rücksprünge (6a, 6b) an den Enden der Verbindungsflanschsegmente (6) sich jeweils zu einem radial vorstehenden Zahn (7a/7b) ergänzen, der mit einem Zahn (7c) gleicher Größe verschraubbar ist, der sich am sich in axialer Richtung anschließenden Verbindungflanschsegment (6) des axial benachbarten Elastomerkörpers (4) befindet.

5. Wellenkupplung nach einem der Ansprüchen 1 bis 4, **dadurch gekennzeichnet,dass** die stufenförmig ineinandergreifenden Vor-und Rücksprünge (6a, 6b) an den Enden der Verbindungflanschsegmente (6) in radialer Richtung einen Abstand (A) vom Außenumfang (12) der Elastomerkörper (4) haben.

## Claims

1. Elastic shaft coupling comprising an drive flange (1) and an driven flange (3), between which elastically deformable elastomeric bodies (4) are arranged, each having the shape of ring segments and arranged in at least two axially adjoining rings surrounding the axis of the shaft coupling, wherein the elastomeric bodies (4) forming the rings are arranged offset to one another in the circumferential direction and are connected undetachably, on their front faces axially-adjoining the drive flange (1) or the driven flange (3), to connecting flange segments (5) which can be axially screwed to the drive flange (1) or the driven flange (3), and are undetachably connected, on the axially-adjoining front faces, with connecting flange segments (6), which segments can be axially screwed to one another,
**characterized in that**
the connecting flange segments (6) of the elastomeric bodies (4) are in each case provided with step-like engaging protrusions and recesses (6a, 6b) engaging one another on their ends adjoining in the circumferential direction, which protrusions and recesses can be screwed to one another and to the connecting flange segment (6), adjoining in the axial direction, of the elastomeric body (4) adjacent in the axial direction.

2. Shaft coupling according to claim 1, **characterized in that** the axial screw connection of the connecting flange segments (6) in the region of the step-like engaging protrusions and recesses (6a, 6b) is effected with through-bolts (11) and, in the remaining circumferential area, with fitting screws (9).

3. Shaft coupling according to claims 1 and 2, **characterized in that** the connecting flange segments (6) comprise radially-protruding teeth (7), which are in each case provided with axially-aligned through-bores (8) for receiving the axially-extending fitting screws (9).

4. Shaft coupling according to claims 1 to 3, **characterized in that** the step-like engaging protrusions and recesses (6a, 6b) on the ends of the connecting flange segments (6) complement each other to form a radially-protruding tooth (7a/7b), which tooth can be screw-connected with a tooth (7c) of the same size which is located on the connecting flange segment (6), adjoining in the axial direction, of the axially-adjacent elastomeric body (4).

5. Shaft coupling according to one of claims 1 to 4, **characterized in that** the step-like engaging protrusions and recesses (6a, 6b) on the ends of the connecting flange segments (6) have a distance (A) in the radial direction to the outer circumference (12) of the elastomeric bodies (4).

## Revendications

1. Accouplement d'arbres élastique avec une bride d'entraînement (1) et une bride de sortie (3), entre lesquelles sont disposés des corps en élastomère (4) élastiquement déformables, qui ont respectivement la forme de segments annulaires et sont disposés dans au moins deux anneaux se raccordant l'un à l'autre de manière axiale, entourant l'axe de l'accouplement d'arbres, dans lequel les corps en élastomère (4) formant les anneaux sont disposés de manière décalée les uns par rapport aux autres dans la direction périphérique et sont reliés de manière inamovible aux segments de bride de raccordement (5) au niveau de leurs surfaces frontales jouxtant de manière axiale la bride d'entraînement (1) ou la bride de sortie (3), qui peuvent être vissés de manière axiale à la bride d'entraînement (1) ou à la bride de sortie (3), et sont reliés également au niveau des surfaces frontales se jouxtant les unes les autres de manière axiale de manière inamovible à des segments de bride de liaison (6), qui peuvent être vissés les uns aux autres de manière axiale,
**caractérisé en ce**
**que** les segments de bride de liaison (6) des corps en élastomère (4) sont pourvus respectivement au niveau de leurs extrémités se jouxtant les unes les autres dans la direction périphérique de parties faisant saillie et de parties en retrait (6a, 6b) s'imbriquant les unes dans les autres en forme de paliers, qui peuvent être vissées entre elles et au segment de bride de liaison (6), jouxtant dans la direction axiale, du corps en élastomère (4) adjacent dans la direction axiale.

2. Accouplement d'arbres selon la revendication 1, **caractérisé en ce que** le vissage axial des segments de bride de liaison (6) est effectué dans la zone des parties faisant saillie et des parties en retrait (6a, 6b) s'imbriquant les unes dans les autres en forme de palier avec des vis de passage (11), et dans la zone périphérique restante, avec des vis de précision (9).

3. Accouplement d'arbres selon les revendications 1 et 2, **caractérisé en ce que** les segments de bride de liaison (6) présentent des dents (7) faisant saillie de manière radiale, qui sont pourvues respectivement d'alésages de passage (8) s'étendant en affleurement de manière axiale, servant à recevoir les vis de précision (9) s'étendant de manière axiale.

4. Accouplement d'arbres selon les revendications 1 à 3, **caractérisé en ce que** les parties faisant saillie et les parties en retrait (6a, 6b) s'imbriquant les unes dans les autres en forme de palier se complètent au niveau des extrémités des segments de bride de liaison (6) respectivement en une dent (7a/7b) faisant saillie de manière radiale, qui peut être vissée à une dent (7c) de même taille, qui se trouve au niveau du segment de bride de liaison (6) se raccordant dans la direction axiale du corps en élastomère (4) adjacent de manière axiale.

5. Accouplement d'arbres selon l'une quelconque des revendications 1 à 4, **caractérisé en ce que** les parties faisant saillie et les parties en retrait (6a, 6b) s'imbriquant les unes dans les autres en forme de palier ont au niveau des extrémités des segments de bride de liaison (6) dans la direction radiale un espacement (A) par rapport à la périphérie extérieure (12) des corps en élastomère (4).
